# EUROPEAN PATENT APPLICATION

(11) **EP 4 141 577 A1**
(43) Date of publication of application: **01.03.2023**
(21) Application number: 22164991.6
(22) Date of filing: 29.03.2022
(51) Int. Cl.: G03H 1/22

(54) **HOLOGRAPHIC DISPLAY SYSTEM AND METHOD FOR GENERATING HOLOGRAPHIC IMAGES**

(30) Priority: 27.08.2021 US 202117458561
(71) Applicant: Himax Display, Inc., Tainan City 74148 (TW)
(72) Inventor: WU, Biing-Seng, 74148 Tainan City (TW); FAN-CHIANG, Kuan-Hsu, 74148 Tainan City (TW)
(74) Representative: Becker, Eberhard

(57) **Abstract**

A holographic display system (100, 200) including a first spatial light modulator panel (112) and a second spatial light modulator panel (114) is provided. The first spatial light modulator panel (112) is configured to receive a first light (LG1) with a first color, and generate a first diffracted light (LG2) with the first color. The second spatial light modulator panel (114) is configured to receive a second light (LR1) with a second color and a third light (LB1) with a third color, and respectively generate a second diffracted light (LR2) with the second color and a third diffracted light (LB2) with the third color. The first color, the second color, and the third color are different colors, and the first diffracted light (LG2), the second diffracted light (LR2) and the third diffracted light (LB2) form holographic images (900). A method for generating holographic images (900) is also provided.

## Description

### BACKGROUND

### Technical Field

The invention relates to a holographic display system and a method for generating holographic images.

### Description of Related Art

A traditional holographic display used in an augmented reality head up display (AR-HUD) system has its picture generated unit (PGU) with three liquid crystal on silicon spatial light modulators (LCOS SLMs), which increase cost and complexity of manufacturing the PGU. Another kind of PGU using only one LCOS SLM with time sequential method, i.e., red, green, blue holographic images are displayed sequentially. The drawbacks of this system is the color-break-up (CBU) effect. In order to mitigate the CBU effect, a high color field rate > 360 Hz is required, but the high color field rate is limited by the liquid crystal materials' response time.

### SUMMARY

The invention is directed to a holographic display system and a method for generating holographic images, where cost and complexity of manufacturing the PGU is low, and the CBU effect can be reduced.

An embodiment of the invention provides a holographic display system including a first spatial light modulator panel and a second spatial light modulator panel. The first spatial light modulator panel is configured to receive a first light with a first color, and generate a first diffracted light with the first color. The second spatial light modulator panel is configured to receive a second light with a second color and a third light with a third color, and respectively generate a second diffracted light with the second color and a third diffracted light with the third color. The first color, the second color, and the third color are different colors, and the first diffracted light, the second diffracted light and the third diffracted light form holographic images.

In an embodiment of the invention, the first color is selected from one color of red, blue and green, and the second color and the third color are selected from the other two colors of red, blue and green.

In an embodiment of the invention, the holographic display system further includes a light source. The light source is configured to output the first light to the first spatial light modulator panel, and output the second light and the third light to the second spatial light modulator panel.

In an embodiment of the invention, the light source includes a first laser, a second laser and a third laser. The first laser is configured to output the first light to the first spatial light modulator panel. The second laser is configured to output the second light to the second spatial light modulator panel. The third laser is configured to output the third light to the second spatial light modulator panel.

In an embodiment of the invention, the holographic display system further includes an aperture. The aperture is configured to receive the first diffracted light, the second diffracted light and the third diffracted light. The first diffracted light, the second diffracted light and the third diffracted light are transmitted through the aperture to form the holographic images.

In an embodiment of the invention, the first spatial light modulator panel and the second spatial light modulator panel form a picture generated unit to generate the holographic images.

An embodiment of the invention provides a method for generating holographic images, which is adapted to a holographic display system. The holographic display system includes a first spatial light modulator panel and a second spatial light modulator panel. The method includes: outputting a first light with a first color to the first spatial light modulator panel, and generating a first diffracted light with the first color by the first spatial light modulator panel; outputting a second light with a second color and a third light with a third color to the second spatial light modulator panel, and respectively generating a second diffracted light with the second color and a third diffracted light with the third color by the second spatial light modulator panel; and generating the holographic images by the first diffracted light, the second diffracted light and the third diffracted light. The first color, the second color, and the third color are different colors.

In an embodiment of the invention, the holographic display system further includes an aperture, and the method further includes: transmitting the first diffracted light, the second diffracted light and the third diffracted light through the aperture to form the holographic images.

To make the aforementioned more comprehensible, several embodiments accompanied with drawings are described in detail as follows.

### BRIEF DESCRIPTION OF THE DRAWINGS

The accompanying drawings are included to provide a further understanding of the disclosure, and are incorporated in and constitute a part of this specification. The drawings illustrate exemplary embodiments of the disclosure and, together with the description, serve to explain the principles of the disclosure.
FIG. 1 is a schematic diagram illustrating a holographic display system according to an embodiment of the invention.
FIG. 2 is a schematic diagram illustrating a holographic display system according to another embodiment of the invention.
FIG. 3 is a flowchart illustrating steps in a method for generating holographic images according to an embodiment of the invention.

### DESCRIPTION OF THE EMBODIMENTS

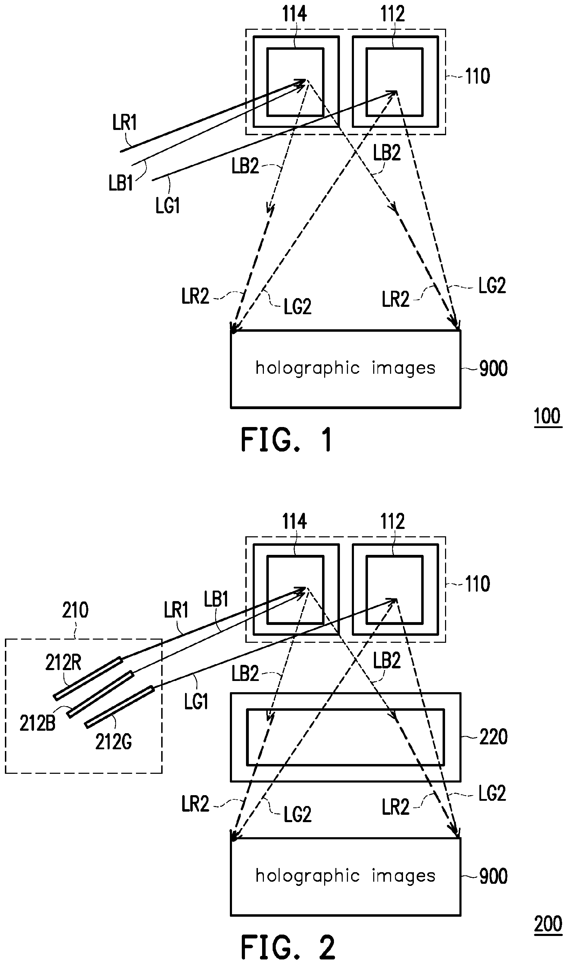

FIG. 1 is a schematic diagram illustrating a holographic display system according to an embodiment of the invention. Referring to FIG. 1, the holographic display system 100 includes a first spatial light modulator panel 112 and a second spatial light modulator panel 114. The first spatial light modulator panel 112 and the second spatial light modulator panel 114 form a picture generated unit (PGU) 110 to generate holographic images 900. The PGU 110 receives lights and diffracts the received lights to generate the holographic images 900. The holographic display system 100 may be applied to an augmented reality head up display (AR-HUD) system.

To specific, the first spatial light modulator panel 112 is configured to receive a first light LG1 with a first color, and generate a first diffracted light LG2 with the first color. The first light LG1 is transmitted to the first spatial light modulator panel 112 and diffracted by the first spatial light modulator panel 112. The first spatial light modulator panel 112 generates and outputs the first diffracted light LG2.

The second spatial light modulator panel 114 is configured to receive a second light LR1 with a second color and a third light BL1 with a third color, and respectively generate a second diffracted light LR2 with the second color and a third diffracted light LB2 with the third color. The second light LR1 is transmitted to the second spatial light modulator panel 114 and diffracted by the second spatial light modulator panel 114. The second spatial light modulator panel 114 generates and outputs the second diffracted light LR2. The third light BL1 is transmitted to the second spatial light modulator panel 114 and diffracted by the second spatial light modulator panel 114. The second spatial light modulator panel 114 generates and outputs the third diffracted light LB2.

The first diffracted light LG2, the second diffracted light LR2 and the third diffracted light LB2 form the holographic images 900 on a display target (not shown). In the present embodiment, the first color, the second color, and the third color are different colors, and the first color is selected from one color of red, blue and green, and the second color and the third color are selected from the other two colors of red, blue and green. For example, the first color, the second color, and the third color are green, red and blue, respectively. Therefore, the first spatial light modulator panel 112 serves as a monochrome liquid crystal on silicon spatial light modulator (LCOS SLM) for green color, and the second spatial light modulator panel 114 serve as a color sequential LCOS SLM for red color and blue color.

FIG. 2 is a schematic diagram illustrating a holographic display system according to another embodiment of the invention. Referring to FIG. 1 and FIG. 2, the holographic display system 200 of the present embodiment is similar to the holographic display system 100 of FIG. 1, and the main difference therebetween, for example, lies in that the holographic display system 200 further includes a light source 210 and an aperture 220.

To be specific, the light source 210 is configured to output the first light LG1 to the first spatial light modulator panel 112. The light source 210 is further configured to output the second light LR1 and the third light LB1 to the second spatial light modulator panel 114. In the present embodiment, the light source 210 includes a first laser 212G, a second laser 212R and a third laser 212B. The first laser 212G is configured to output the first light LR1 to the first spatial light modulator panel 112. The second laser 212R is configured to output the second light LR1 to the second spatial light modulator panel 114. The third laser is configured to output the third light LB1 to the second spatial light modulator panel 114.

The aperture 220 is configured to receive the first diffracted light LG2, the second diffracted light LR2 and the third diffracted light LB2. The first diffracted light LG2, the second diffracted light LR2 and the third diffracted light LB2 are transmitted through the aperture 220 to form the holographic images 900.

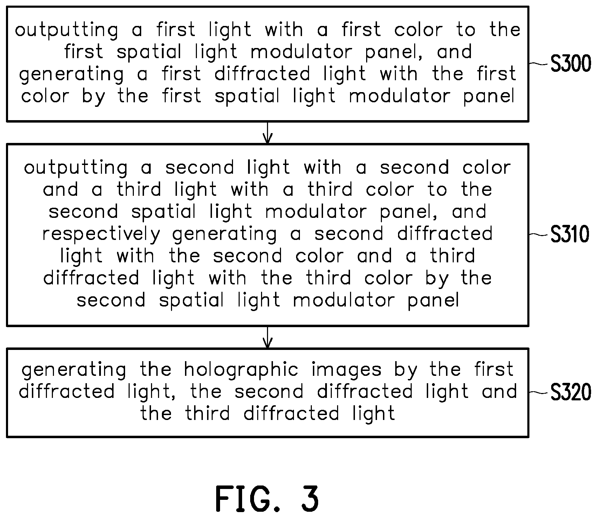

FIG. 3 is a flowchart illustrating steps in a method for generating holographic images according to an embodiment of the invention. Referring to FIG. 2 and FIG. 3, the method for generating the holographic images of the present embodiment is at least adapted to the holographic display system 200 of FIG. 2.

Taking the holographic display system 200 for example, in step S300, the light source 210 outputs a first light LG1 with a first color to the first spatial light modulator panel 112, and generating a first diffracted light LG2 with the first color by the first spatial light modulator panel 112. In step S310, the light source 210 outputs a second light LR1 with a second color and a third light LB1 with a third color to the second spatial light modulator panel 114, and respectively generates a second diffracted light LR2 with the second color and a third diffracted light LB2 with the third color by the second spatial light modulator panel 114. In step S320, the PGU 110 generates the holographic images 900 by the first diffracted light LG2, the second diffracted light LR2 and the third diffracted light LB2, where the holographic images 900 are formed on a display target.

In summary, in the embodiments of the invention, the PGU of the holographic display system includes two separate LCOS SLMs. One is the monochrome LCOS SLM for processing one color, and the other is the color sequential LCOS SLM for processing the other two colors. Therefore, cost and complexity of manufacturing the PGU is low, and the CBU effect can be reduced. In addition, it is easier to find suitable liquid crystal materials for the PGU.

## Claims

1. A holographic display system (100, 200), comprising:
a first spatial light modulator panel (112), configured to receive a first light (LG1) with a first color, and generate a first diffracted light (LG2) with the first color; and
a second spatial light modulator panel (114), configured to receive a second light (LR1) with a second color and a third light (LB1) with a third color, and respectively generate a second diffracted light (LR2) with the second color and a third diffracted light (LB2) with the third color,
wherein the first color, the second color, and the third color are different colors, and the first diffracted light (LG2), the second diffracted light (LR2) and the third diffracted light (LB2) form holographic images.

2. The holographic display system (100, 200) of claim 1, wherein the first color (LG1) is selected from one color of red, blue and green, and the second color (LR1) and the third color (LB1) are selected from the other two colors of red, blue and green.

3. The holographic display system (100, 200) of claim 1, further comprising:
a light source (210), configured to output the first light (LG1) to the first spatial light modulator panel (112), and output the second light (LR1) and the third light (LB1) to the second spatial light modulator panel (114).

4. The holographic display system (100, 200) of claim 3, wherein the light source (210) comprises:
a first laser (212G), configured to output the first light (LG1) to the first spatial light modulator panel (112);
a second laser (212R), configured to output the second light (LR1) to the second spatial light modulator panel (114); and
a third laser (212B), configured to output the third light (LB1) to the second spatial light modulator panel (114).

5. The holographic display system (100, 200) of claim 1, further comprising:
an aperture (220), configured to receive the first diffracted light (LG2), the second diffracted light (LR2) and the third diffracted light (LB2), wherein the first diffracted light (LG2), the second diffracted light (LR2) and the third diffracted light (LB2) are transmitted through the aperture (220) to form the holographic images (900).

6. The holographic display system (100, 200) of claim 1, wherein the first spatial light modulator panel (112) and the second spatial light modulator panel (114) form a picture generated unit (110) to generate the holographic images (900).

7. A method for generating holographic images (900), adapted to a holographic display system (100, 200), wherein the holographic display system (100, 200) comprises a first spatial light modulator panel (112) and a second spatial light modulator panel (114), the method comprising:
outputting a first light (LG1) with a first color to the first spatial light modulator panel (112), and generating a first diffracted light (LG2) with the first color by the first spatial light modulator panel (112) (S300);
outputting a second light (LR1) with a second color and a third light (LB1) with a third color to the second spatial light modulator panel (114), and respectively generating a second diffracted light (LR2) with the second color and a third diffracted light (LB2) with the third color by the second spatial light modulator panel (114) (S310); and
generating the holographic images (900) by the first diffracted light (LG2), the second diffracted light (LR2) and the third diffracted light (LB2) (S320),
wherein the first color, the second color, and the third color are different colors.

8. The method for generating the holographic images of claim 7, wherein the first color is selected from one color of red, blue and green, and the second color and the third color are selected from the other two colors of red, blue and green.

9. The method for generating the holographic images of claim 7, wherein the holographic display system (100, 200) further comprises an aperture (220), and the method further comprises:
transmitting the first diffracted light (LG2), the second diffracted light (LR2) and the third diffracted light (LB2) through the aperture (220) to form the holographic images (900).
